# EUROPÄISCHE PATENTSCHRIFT

(11) **EP 0 865 595 B1**
(45) Veröffentlichungstag und Bekanntmachung des Hinweises auf die Patenterteilung: **15.11.2000**
(21) Anmeldenummer: 96943067.7
(22) Anmeldetag: 10.12.1996
(51) Int. Cl.: F25B 9/14

(54) **TIEFTEMPERATUR-REFRIGERATOR MIT EINEM KALTKOPF, SOWIE VERWENDUNG DIESES REFRIGERATORS**
LOW-TEMPERATURE REFRIGERATOR WITH COLD HEAD, AND USE THEREOF
MACHINE FRIGORIFIQUE BASSES TEMPERATURES DOTEE D'UNE TETE DE REFROIDISSEMENT, ET UTILISATION D'UNE TELLE MACHINE

(30) Priorität: 15.12.1995 DE 19547030
(43) Veröffentlichungstag der Anmeldung: 23.09.1998
(73) Patentinhaber: Leybold Vakuum GmbH, 50968 Köln (DE)
(72) Erfinder: HÄFNER, Hans-Ulrich, D-50996 Köln (DE); SOUS, Dieter, D-50374 Erftstadt (DE)
(74) Vertreter: Leineweber, Jürgen, Dipl.-Phys.
(86) Internationale Anmeldenummer: EP9605503
(87) Internationale Veröffentlichungsnummer: WO9722839

(56) Entgegenhaltungen:
- GB-A- 1 324 502
- US-A- 2 966 035
- US-A- 3 221 509
- US-A- 3 473 341
- US-A- 4 310 337
- US-A- 4 404 808
- US-A- 4 543 792
- US-A- 4 724 676
- US-A- 5 092 130
- US-A- 5 113 663

## Beschreibung

Die Erfindung bezieht sich auf einen zur Erzeugung von Temperaturen eines bestimmten Tieftemperaturbereichs dienenden Tieftemperatur-Refrigerator mit einem Kaltkopf, der mit einem Regenerator ausgerüstet ist und in dem zur Kälteerzeugung ein thermodynamischer Kreisprozeß (regenerativer Kälteerzeugungsprozeß) ausgeführt wird. Außerdem bezieht sich die Erfindung auf zweckmäßige Verwendungen erfindungsgemäßer Refrigeratoren.

Es ist bekannt, Tieftemperatur-Refrigeratoren bei Kryopumpen oder zur Kühlung der Magneten von Kernspintomographen einzusetzen. Bei diesen Applikationen soll der Kaltkopf Temperaturen im Bereich von 20 K und weniger erzeugen. Üblicherweise werden deshalb bei diesen Applikationen Refrigeratoren mit zwei- oder dreistufig ausgebildeten Kaltköpfen eingesetzt, die z.B. nach dem Giffon-McMahon-Prinzip arbeiten. Bei diesen tiefen Temperaturen ist jedoch die Kälteleistung dieser Maschinen begrenzt. Bei handelsüblichen zweistufigen Kaltköpfen beträgt sie ca. 5 bis 10 W bei einer Temperatur von 20 K. Ist der Leistungsbedarf höher, muß eine Mehrzahl zweistufiger Kaltköpfe eingesetzt werden, um die entsprechende Leistung in der Summe zu erreichen.

Zum Stand der Technik gehört der Inhalt der Schriften GB-A-13 24 502 und US-A-43 10 337. Die zuerst genannte Schrift offenbart einen einstufigen Refrigerator mit einem mehrschichtigen Regenerator aus Haliden. Durch die US-A-43 10 337 ist ein einstufiger Refrigerator mit zwei parallel zueinander betriebenen Regeneratoren bekannt, von denen einer zwei Werkstoffschichten aufweist.

Der vorliegenden Erfindung liegt die Aufgabe zugrunde, den Aufwand für die Erzeugung tiefer Temperaturen zu reduzieren und darüberhinaus ein relativ einfaches Mittel einzusetzen, um den Kaltkopf eines Refrigerators der eingangs erwähnten Art für einen bestimmten Temperaturbereich besonders geeignet zu machen.

Erfindungsgemäß wird diese Aufgabe durch die Merkmale der Patentansprüche gelöst. Allein durch die Verwendung einer einstufigen Kältemaschine wird bereits eine erhebliche Reduzierung des technischen Aufwandes erreicht. Darüberhinaus wurde festgestellt, daß auch mit einstufig ausgebildeten Kältemaschinen Endtemperaturen von unter 20 K erzeugt werden können. Dabei hat sich überraschenderweise herausgestellt, daß mit Kaltköpfen, die mit geeignet ausgebildeten Regeneratoren ausgerüstet sind, auch in Temperaturbereichen um 20 K wesentlich höhere Leistungen erreicht werden können, als es mit den oben erwähnten zweistufigen Kaltköpfen möglich ist. Ursache dieser Leistungsverbesserung ist zum einen die besondere Ausbildung des Regenerators. Zum anderen wird bei zweistufigen Kaltköpfen ein Teil der Leistung für die erste Stufe verbraucht und daher bei tiefen Temperaturen nicht optimal genutzt, so daß der erzielte Wirkungsgrad insgesamt schlecht ist. Die Realisierung der Erfindung ermöglicht es deshalb, statt der bisher für Temperaturen um 20 K üblichen zweistufigen Kältemaschine eine einfache und damit zuverlässige einstufige Maschine einzusetzen, und darüberhinaus noch eine Leistungssteigerung zu erzielen.

Kaltköpfe der erfindungsgemäßen Art sind besonders geeignet bei Applikationen, bei denen die Zieltemperaturen etwas höher als 20 K liegen. Durch die Auswahl der Eigenschaften des Regeneratormaterials und entsprechende Schichtung verschiedener Materialien kann der Kaltkopf bzw. die Kältemaschine auf den gewünschten Temperaturbereich optimiert werden.

Ein Beispiel für eine Applikation, bei der die Verwendung des erfindungsgemäßen Kaltkopfes besonders geeignet ist, ist die Kühlung von Hochtemperatur-Supraleitern (HT_{C}-Material) mit Sprungtemperaturen T_{C} oberhalb der Temperatur von flüssigem Stickstoff, insbesondere bei Anwendungen mit hohen Strömen oder Magnetfeldern (Magnete für den Tesla Bereich, Energiespeicher, MRI, Strombegrenzer u.ä.).

Um diese hohen Ströme / Magnetfelder nutzen zu können, reicht es nicht aus, mit LN₂ (77 K) zu kühlen; der Supraleiter sollte auf mindestens 1/3 T_{C} gekühlt werden, damit entsprechend hohe Stromdichten / Magnetfelder überhaupt möglich sind. Demzufolge ist bei dieser Applikation ein Temperaturbereich von ca. 20 bis 25 K zur Kühlung anzustreben. Die üblichen bisher in diesem Temperaturbereich nutzbaren Kältemaschinen sind i.a. zweistufige Gifford McMahon (od. Stirling) Typen, deren eigentlich! Zieltemperaturen unterhalb 20 K (≈ 10-15 K) liegen. Diese Temperaturen sind für die HTSL nicht erforderlich bzw. aus Gründen des Gesamtwirkungsgrades nicht gewünscht. Weiterhin liefern die erwähnten zweistufigen Maschinen - wie weiter oben bereits erwähnt - nur eine begrenzte Kälteleistung von ca. 5 bis 10 W bei 20 K. Demgegenüber sind bei größeren HTSL Elementen Leistungen von 20 bis 25 W oder mehr bei ca. 22-25 K gefragt.

Bisherige konventionelle einstufige Maschinen haben eine Endtemperatur (ohne Kälteleistung) von ca. 25 bis 27 K, was wiederum für die HTSL-Kühlung zu hoch ist. Den angestrebten Bereich 20 bis 25 K mit erheblicher Leistung erreicht man erst durch die erfindungsgemäßen Verbesserungen. Im Gegensatz zur zweistufigen Maschine (bei Nutzung als 20 bis 25 K-Kühler) offeriert die einstufige noch den Vorteil, keine kalte (2. Stufe-) Dichtung aufzuweisen (sensibles Verschleißteil) und insgesamt einen einfacheren Aufbau zu haben, so daß eine gegenüber zweistufigen Maschinen höhere Zuverlässigkeit und einfachere Wartung resultiert.

Weitere Vorteile und Einzelheiten der Erfindung sollen anhand der in den Figuren 1 bis 9 dargestellten Ausführungsbeispielen erläutert werden. Es zeigen:
- Figur 1 eine prinzipielle Darstellung eines Tieftemperatur-Refrigerators,
- Figuren 2 und 3 je einen Verdränger mit einem darin angeordneten Regenerator,
- Figur 4 Leistungskennlinien,
- Figur 5 die Applikation eines erfindungsgemäß ausgebildeten Kaltkopfes bei der Kühlung eines Magneten aus Supraleitermaterial,
- Figuren 6 und 7 Applikationen eines erfindungsgemäß ausgebildeten Kaltkopfes bei der Kühlung einer Spule aus HT_{C}-Material sowie
- Figuren 8 und 9 Applikationen eines erfindungsgemäß ausgebildeten Kaltkopfes bei Kryopumpen.

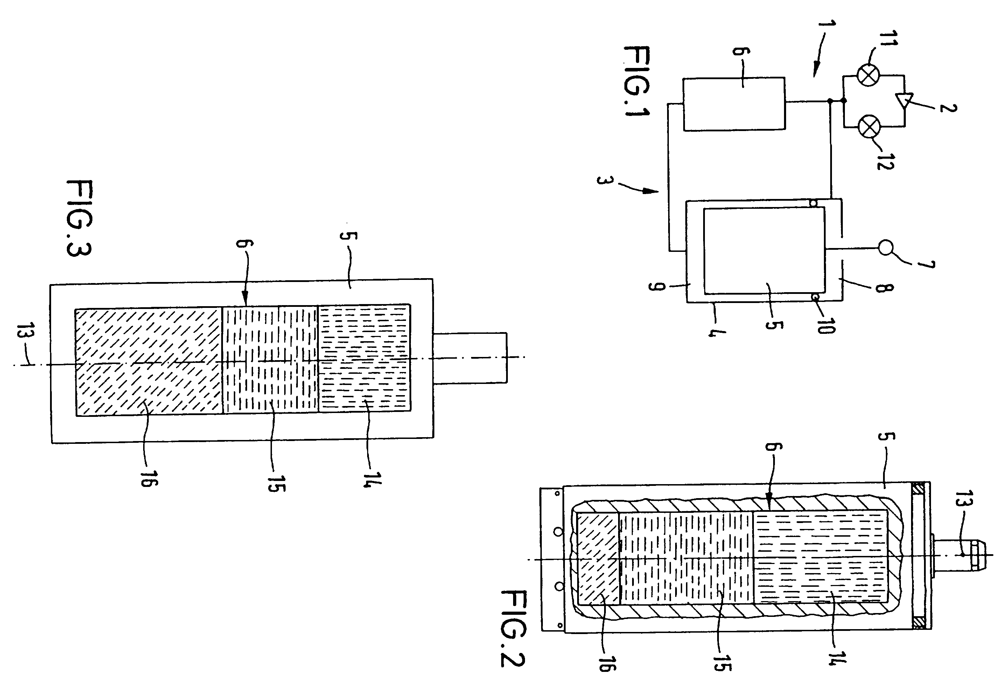

Figur 1 zeigt schematisch ein Beispiel für einen Tieftemperatur-Refrigerator 1. Dieser umfaßt den Kompressor 2 und den Kaltkopf 3. Wesentliche Bestandteile des Kaltkopfes 3 sind ein Zylinder 4, ein sich im Zylinder befindender Verdränger 5 und ein Regenerator 6. Der Verdränger 5 wird vom Antrieb 7, welcher mechanisch oder pneumatisch sein kann, im Zylinder 4 hin und her bewegt. Oberhalb und unterhalb des Verdrängers 5 befinden sich Kammern 8 und 9 für das Arbeitsgas. In Reihe mit diesen Kammern ist der Regenerator 6 geschaltet, der sich bei vielen Ausführungen der hier betroffenen Gas-Kältemaschinen innerhalb des Verdrängers 5 befindet. Mit 10 ist eine Dichtung bezeichnet, die bei im Verdränger 5 befindlichen Regenerator 6 u.a. dafür sorgt, daß das Arbeitsgas den Regenerator 6 vollständig durchströmt.

Mit Hilfe des Kompressors 2 und der Ventile 11, 12 werden die Kammern 8, 9 in geeigneter Reihenfolge mit einer unter Hochdruck und einer unter Niederdruck stehenden Arbeitsgasleitung verbunden, so daß der gewünschte thermodynamische Kreisprozeß abläuft. Dadurch wird einer Seite des Zylinders 4 (Expansionskammer 9) ständig Wärme entzogen. Der Regenerator 6 speichert einen Teil der erzeugten Kälte und führt sukzessiv zu einer Vorkühlung des aus Kammer 8 in Kammer 9 verschobenen Gases, so daß sich diese Seite auf tiefe Temperaturen abkühlt.

Entsprechendes gilt auch für Kältemaschinen, die nach dem Pulse Tube Prinzip arbeiten. Bei diesen kann zwar auf einen mechanischen Verdränger verzichtet werden, die Funktion des Regenerators als Vorkühler für das zyklisch zu expandierende Arbeitsgas ist aber dieselbe.

Die Figuren 2 und 3 zeigen Verdränger 3 mit einem jeweils darin untergebrachten Regenerator 6. Ihre Längsachse ist mit 13 bezeichnet. Sie umfassen jeweils drei Schichtungen bzw. Stufen 14, 15 und 16 aus unterschiedlichen Regenerator-Werkstoffen.

Beim Verdränger nach Figur 2 besteht die dem warmen Ende des Verdrängers benachbarte Schichtung 14 aus einem ersten Paket von Bronzenetz-Abschnitten, die sich senkrecht zur Längsachse erstrecken. Diese Schichtung erstreckt sich über zwei bis drei Siebtel der Länge des Regenerators. Die zweite Schichtung 15 besteht aus einem Paket von Bronzenetz-Abschnitten mit einer anderen, z.B. kleineren Maschendichte. Auch diese Schicht erstreckt sich über zwei bis drei Siebtel der Länge des Regenerators 6. Schließlich folgt auf der kalten Seite des Verdrängers 3 eine Schicht 16 aus Blei, vorzugsweise Bleikugeln. Sie hat eine Ausdehnung von ein bis zwei Siebtel der Länge des Regenerators 6.

In einer für den Tieftemperaturbereich 15 bis 35 K realisierten Variante weist der Regenerator 6 folgende Schichtungen auf (Figur 3):

| Schichtung 14: | |
|---|---|
| Werkstoff | Cu-Bronze |
| Struktur | Sich radial erstreckende Netze mit etwa 200 mesh |
| Höhe | ca. 40 % der Gesamtlänge des Regenerators 6 |

| Schichtung 15: | |
|---|---|
| Werkstoff | Cu-Bronze |
| Struktur | Sich radial erstreckende Netze mit etwa 120 mesh |
| Höhe | ca. 40 % der Gesamtlänge des Regenerators 6 |

| Schichtung 16: | |
|---|---|
| Werkstoff | Bleikugeln |
| Struktur | Ø 200 bis 300 µm |
| Höhe | Ca. 20 % der Gesamtlänge des Regenerators 6 |

Ein Kaltkopf mit einem diese Schichtungen aufweisenden Regenerator 6 und einem Durchmesser von etwa 50 mm ist für den Temperaturbereich 15 bis 35 K, insbesondere 20 bis 25 K, besonders geeignet. Durch Variation der prozentualen Anteile (Höhe der Schichten 14, 15, 16) der einzelnen Regeneratorschichten, durch Wahl anderer Materialien als Cu-Bronze und Blei sowie durch deren Struktur kann die Kälteleistung für andere Temperatur-Zielbereiche gezielt optimiert werden.

Bei einem Regenerator für den Zielbereich 35 bis 80 K besteht z.B. die Schichtung 16 nicht aus Bleikugeln, sondern ebenfalls aus Cu-Bronze-Netze mit 80 bis 200 mesh. Darüberhinaus kann im warmen Bereich (Schichtung 14) vorteilhaft Edelstahlgewebe mit 100 bis 200 mesh eingesetzt werden.

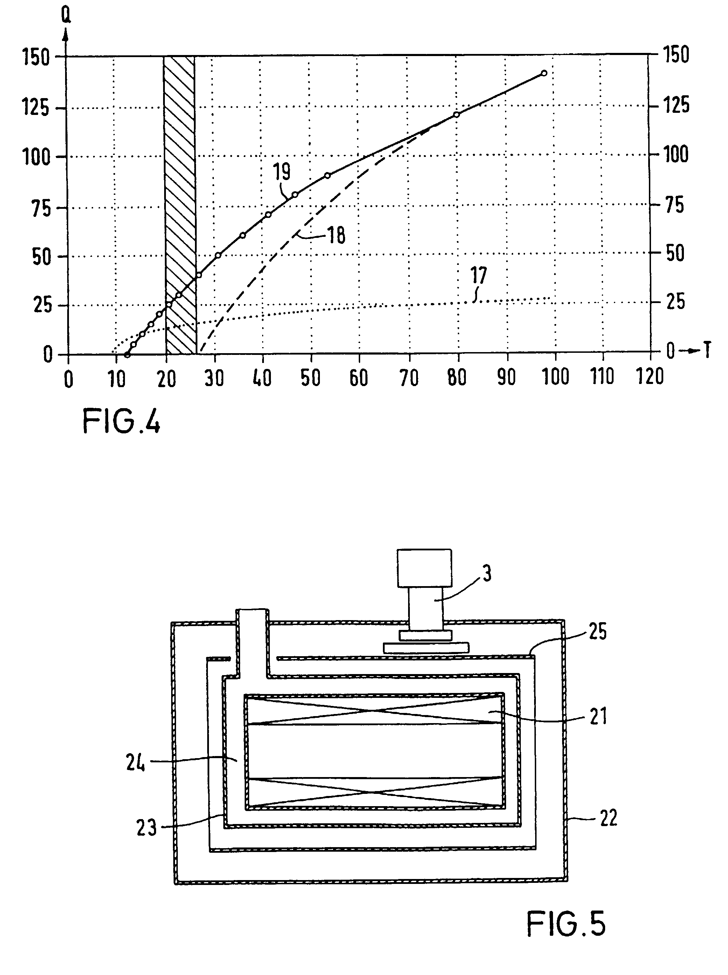

Figur 4 zeigt drei Leistungskennlinien 17, 18, 19 in einem Koordinatensystem, in dem die Leistung Q (y-Achse) in Abhängigkeit von der Temperatur T (x-Achse) eingetragen ist. Die Linie 17 ist die Leistungskennlinie der zweiten Stufe eines üblichen zweistufigen Kaltkopfes. Die Linie 18 gibt die Leistung eines einstufigen Kaltkopfes nach dem Stand der Technik wieder. Die Linie 19 entspricht der Leistungskennlinie eines erfindungsgemäß ausgebildeten und für den Temperaturbereich 20 bis 25 K optimierten Kaltkopfes.

Die Figuren 5 bis 7 zeigen Anwendungen der Erfindung bei der Kühlung von supraleitenden Magneten oder Spulen 21, die sich jeweils im Gehäuse 22 befinden. Beim Ausführungsbeispiel nach Figur 4 befindet sich ein supraleitender Magnet 21 im Hohlraum eines doppelwandig ausgebildeten Behälters 23. In dem von den Wandungen gebildeten Raum 24 befindet sich flüssiges Helium. In diesem Fall handelt es sich um einen Magneten 21 aus klassischem (Tieftemperatur-) Supraleitermaterial, welcher im allgemeinen eine Kühlung von 4 bis 6 K benötigt und deshalb in einem Flüssighelium-Bad untergebracht ist. Der Behälter 23 ist von einem thermischen Abschirmschild 25 umgeben, der mit Hilfe eines einstufigen, erfindungsgemäß gestalteten Kaltkopfes 3 gekühlt wird. Der im Kaltkopf 3 befindliche Regenerator 6 ist zweckmäßig für den Temperaturbereich 10 bis 30 K optimiert.

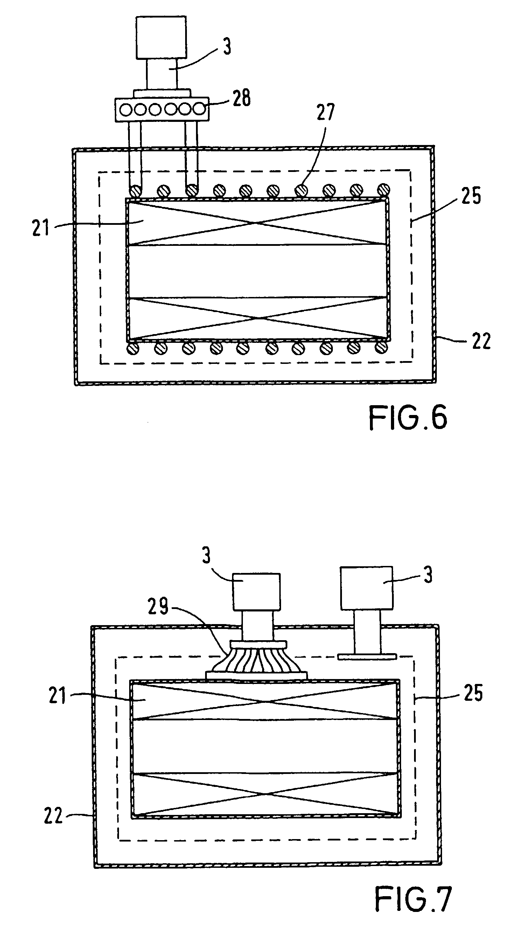

Beim Ausführungsbeispiel nach Figur 6 ist der Magnet 21 von einer Rohrschlange 27 umgeben, die Bestandteil eines Helium-Kreislaufs mit dem Wärmetauscher 28 ist. Die Kühlung erfolgt mit Hilfe des einstufigen Kaltkopfes 3, der zweckmäßig wie beim Ausführungsbeispiel nach Figur 4 ausgebildet ist und das zirkulierende Kreislaufgas auf eine Temperatur herunterkühlt, die zur Kühlung der supraleitenden Spule benötigt wird. Ist die Spule aus HTSL-Draht hergestellt, dann ist der Kaltkopf zweckmäßig für einen Temperaturbereich 20 bis 25 K optimiert.

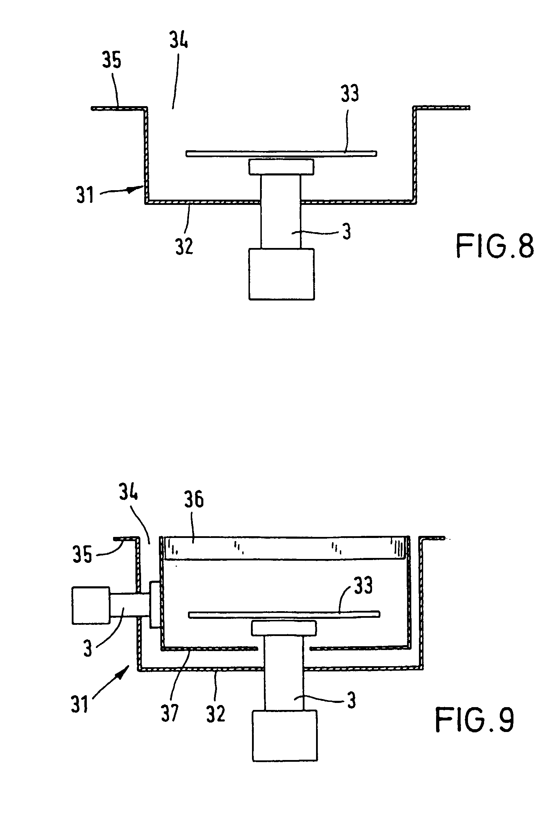

Beim Ausführungsbeispiel nach Figur 7 steht der einstufige Kaltkopf 3 mechanisch (z.B. über Kupfer-Bänder 29) mit dem supraleitenden Magneten 21 - vorzugsweise aus HTSL-Werkstoff - in wärmeleitender Verbindung. Zur Temperierung des Schildes 25 ist ein weiterer einstufiger Kaltkopf 3 nach der Erfindung vorgesehen, der für einen entsprechend höheren Temperaturbereich (z.B. 50 bis 80 K) optimiert ist.

Schließlich zeigen die Figuren 8 und 9 die Anwendung erfindungsgemäßer Kaltköpfe 3 bei Kryopumpen 31. Diese weisen jeweils ein topfförmiges Gehäuse 32 mit einer darin befindlichen Pumpfläche 33 auf. Die offene Seite des Gehäuses 32 bildet den Pumpeneinlaß 34 und ist mit einem Flansch 35 zum Anschluß an einen Rezipienten ausgerüstet.

Bei der Kryopumpe 31 nach Figur 8 ist eine "offenliegende" Kondensationsfläche als Pumpfläche 33 vorhanden. Die Pumpfläche 33 steht mit dem Kaltkopf 3 in wärmeleitender Verbindung und erstreckt sich parallel zur Ebene der Einlaßöffnung 34. "Offenliegend" bedeutet, daß ein im Pumpeneinlaß 34 befindliches, der Abschirmung von Strahlung dienendes Baffle nicht vorhanden ist. Diese Bauweise ist bisher nur bei Kryopumpen für Wasserdampf bekannt. Infolge der Verwendung eines erfindungsgemäß ausgebildeten Kaltkopfes kann diese Bauweise jetzt auch bei Kryopumpen für bei tieferen Temperaturen kondensierbare Gase, wie Stickstoff, Argon oder dergleichen, eingesetzt werden. Der Kaltkopf 3 ist auf solche Temperaturen optimiert, die zur Kondensation der Gase erforderlich sind. Für Stickstoff und Argon ist eine Temperatur von ca. 20 K erforderlich; für Xenon reicht eine Kühlung auf 35 K aus. Eine Optimierung auf Temperaturen aus dem Temperaturbereich 10 bis 35 K ist deshalb bei dieser Applikation zweckmäßig.

Bei der Kryopumpe 31 nach Figur 9 ist ein im Pumpeneinlaß 34 angeordnetes Baffle 36 vorhanden. Es steht in wärmeleitender Verbindung mit einem Strahlungsschild 37, das die Pumpfläche 33 umgibt. Für die Kühlung von Baffle 36 und Schild 37 ist ein zweiter, vom einstufigen Kaltkopf 3 zur Kühlung der Pumpfläche 33 unabhängiger, ebenfalls einstufiger Kaltkopf 3 vorgesehen. Zweckmäßig ist der der Pumpfläche 33 zugeordnete Kaltkopf wieder für Temperaturen im Bereich von 10 bis 35 K optimiert, während der dem Schild 37 zugeordnete Kaltkopf 3 für Temperaturen von etwa 80 K optimiert ist.

Ein wesentlicher Vorteil von mit einstufigen Kaltköpfen 3 gekühlten Kryopumpen liegt noch darin, daß einstufige Kaltköpfe bei höheren Temperaturen wesentlich höhere Leistungen haben als zweistufige Kaltköpfe (vgl. Figur 4). Kryopumpen mit einstufigen Kaltköpfen sich deshalb besonders geeignet für Applikationen, bei denen die Kryopumpe häufiger abgeschaltet werden muß. Die bis zum Erreichen der Betriebstemperatur vergehenden Einkühlzeiten sind bei Kryopumpen mit einstufigen Kaltköpfen wesentlich kürzer.

## Patentansprüche

1. Zur Erzeugung von Temperaturen eines bestimmten Tieftemperaturbereichs dienender Tieftemperatur-Refrigerator (1) mit einem Kaltkopf (3), der mit einem Regenerator (7) ausgerüstet ist und in dem zur Kälteerzeugung ein thermodynamischer Kreisprozeß (regenerativer Kälteerzeugungsprozeß) ausgeführt wird; der Kaltkopf (3) ist einstufig ausgebildet und die physikalischen Eigenschaften des Regenerators (7) der Kältemaschine (1) sind so gewählt, daß der Kaltkopf (26) in dem gewünschten Temperaturbereich eine optimale Kälteleistung hat; dazu weist der Regenerator (6) die drei folgenden Schichtungen auf: eine erste, auf der warmen Seite des Regenerators befindliche Schichtung (14) aus Bronzenetz-Abschnitten, die sich über zwei bis drei Siebtel der Länge des Regenerators (6) erstreckt; eine zweite Schichtung (15) aus Bronzenetz-Abschnitten mit einer kleineren Maschendichte, die sich ebenfalls über zwei bis drei Siebtel der Länge des Regenerators (6) erstreckt; eine dritte Schichtung (16), die je nach dem gewünschten Zieltemperaturbereich aus Bleikugeln, aus einem Bleisinter-Werkstoff oder aus Bronzenetz-Abschnitten besteht und die sich über ein bis zwei Siebtel der Länge des Regenerators (6) erstreckt.

2. Refrigerator nach Anspruch 1 oder 2, dadurch gekennzeichnet, daß er für Temperaturen aus dem Tieftemperaturbereich 15 bis 35 K optimiert ist und die folgenden Schichtungen aufweist:
| erste Schichtung (14): | |
|---|---|
| Werkstoff | Cu-Bronze |
| Struktur | Sich radial erstreckende Netze mit etwa 200 mesh |
| Höhe | ca. 40 % der Gesamtlänge des Regenerators (6 ) |
| zweite Schichtung (15): | |
|---|---|
| Werkstoff | Cu-Bronze |
| Struktur | Sich radial erstreckende Netze mit etwa 120 mesh |
| Höhe | ca. 40 % der Gesamtlänge des Regenerators (6) |
| dritte Schichtung (16): | |
|---|---|
| Werkstoff | Bleikugeln |
| Struktur | Ø 200 bis 300 µm |
| Höhe | Ca. 20 % der Gesamtlänge des Regenerators (6) |

3. Refrigerator nach Anspruch 1, dadurch gekennzeichnet, daß er für Temperaturen aus dem Temperaturbereich 35 bis 80 K optimiert ist und daß er die folgenden Schichten aufweist
| erste Schichtung (14): | |
|---|---|
| Werkstoff | Cu-Bronze |
| Struktur | Sich radial erstreckende Netze mit etwa 200 mesh |
| Höhe | ca. 40 % der Gesamtlänge des Regenerators (6) |
| zweite Schichtung (15): | |
|---|---|
| Werkstoff | Cu-Bronze |
| Struktur | Sich radial erstreckende Netze mit etwa 120 mesh |
| Höhe | ca. 40 % der Gesamtlänge des Regenerators (6) |
| dritte Schichtung (16): | |
|---|---|
| Werkstoff | Cu-Bronze |
| Struktur | sich radial erstreckende Netze mit 80 bis 200 mesh |
| Höhe | Ca. 20 % der Gesamtlänge des Regenerators (6) |

4. Refrigerator nach Anspruch 3, dadurch gekennzeichnet, daß anstelle der Cu-Bronze-Netzabschnitte in der ersten Schichtung (14) Edelstahl-Netzabschnitte mit 100 bis 200 mesh vorgesehen sind.

5. Verwendung eines einstufigen Refrigerators (1) mit den Merkmalen eines der Patentansprüche 1 bis 4 zur Kühlung einer Abschirmung (25) eines Magneten (21) aus Tieftemperatur-Suptraleitermaterial, wobei der im Kaltkopf (3) befindliche Regenerator (6) für den Temperaturbereich 10 bis 30 K optimiert ist (Fig. 5).

6. Verwendung eines einstufigen Refrigerators (1) mit den Merkmalen eines der Patentansprüche 1 bis 4 zur Kühlung einer aus einem Hochtemperatur-Supraleiter hergestellten Spule (21), wobei der im Kaltkopf (3) befindliche Regenerator (6) für den Temperaturbereich 20 bis 25 K optimiert ist (Fig. 6).

7. Verwendung von einstufigen Refrigeratoren (1) mit den Merkmalen eines der Patentansprüche 1 bis 4 sowohl zur Kühlung einer aus einem Hochtemperatur-Supraleiter hergestellten Spule (21) nach Anspruch 6 als auch zur Kühlung eines thermischen Abschirmschildes (25) der Spule (21), wobei der der Kühlung des Schildes (25) dienende Kaltkopf (3) für den Temperaturbereich 50 bis 80 K optimiert ist (Fig. 7).

8. Verwendung eines einstufigen Refrigerators (1) mit den Merkmalen eines der Patentansprüche 1 bis 4 zur Kühlung der Pumpflächen (33) einer Kryopumpe (31), wobei der im Kaltkopf (3) befindliche Refrigerator (6) für einen Temperaturbereich 10 bis 35 K optimiert ist (Fig. 8).

9. Verwendung von einstufigen Refrigeratoren (1) mit den Merkmalen eines der Patentansprüche 1 bis 4 sowohl zur Kühlung der Pumpflächen einer Kryopumpe (33) nach Patentanspruch 8 als auch zur Kühlung eines die Pumpflächen (33) umgebenden Strahlungsschildes (37), wobei der der Kühlung des Schildes (37) dienende Kaltkopf (3) für Temperaturen von etwa 80 K optimiert ist (Fig. 9).

## Claims

1. A low temperature refrigerator (1) used for generating temperatures in a given low temperature range, with a refrigeration head (3), which is equipped with a regenerator (7) and in which a thermodynamic cycle (regenerative cold generation process) is carried out to generate cold; the refrigeration head (3) has a single stage design and the physical properties of the regenerator (7) of the refrigeration machine (1) are selected in such a manner that-the refrigeration head (26) has an optimal refrigeration capacity in the desired temperature range; to this end the regenerator (6) comprises the three following layers: a first layer (14) of bronze lattice sections which is disposed on the warm side of the regenerator and extends over two to three sevenths of the length of the regenerator (6); a second layer (15) of bronze lattice sections having a lower mesh density, which also extends over two to three sevenths of the length of the regenerator (6); a third layer (16), which depending on the desired target temperature range is made of lead balls, a sintered lead material or bronze lattice sections and extends over one to two sevenths of the length of the regenerator (6).

2. A refrigerator according to claim 1 or 2,
characterised in that it is optimised for temperatures from the low temperature range of 15 to 35 K and comprises the following layers:
| first layer (14): | |
|---|---|
| material | Cu-bronze |
| structure | radially extending lattices with approx. 200 mesh |
| height | approx. 40% of the overall length of the regenerator (6) |
| second layer (15): | |
|---|---|
| material | Cu-bronze |
| structure | radially extending lattices with approx. 120 mesh |
| height | approx. 40% of the overall length of the regenerator (6) |
| third layer (16): | |
|---|---|
| material | lead balls |
| structure | Ø 200 to 300 µm |
| height | approx. 20% of the overall length of the regenerator (6) |

3. A refrigerator according to claim 1, characterised in that it is optimised for temperatures from the low temperature range of 35 to 80 K and comprises the following layers:
| first layer (14) : | |
|---|---|
| material | Cu-bronze |
| structure | radially extending lattices with approx. 200 mesh |
| height | approx. 40% of the overall length of the regenerator (6) |
| second layer (15): | |
|---|---|
| material | Cu-bronze |
| structure | radially extending lattices with approx. 120 mesh |
| height | approx. 40% of the overall length of the regenerator (6) |
| third layer (16): | |
|---|---|
| material | Cu-bronze |
| structure | radially extending lattices with approx. 80 to 200 mesh |
| height | approx. 20% of the overall length of the regenerator (6) |

4. A refrigerator according to claim 3, characterised in that instead of the CU-bronze lattice sections in the first layer (14), stainless steel lattice sections with 100 to 200 mesh are provided.

5. Use of a single stage refrigerator (1) with the features of one of claims 1 to 4 for cooling a shield (25) of a magnet (21) of low temperature superconductor material, the regenerator (6) disposed in the refrigeration head (3) being optimised for the temperature range of 10 to 30 K (Fig. 5).

6. Use of a single stage refrigerator (1) with the features of one of claims 1 to 4 for cooling a coil (21) manufactured from a high temperature superconductor, the regenerator (6) disposed in the refrigeration head (3) being optimised for the temperature range of 20 to 25 K (Fig. 6).

7. Use of single stage refrigerators (1) with the features of one of claims 1 to 4 both for cooling a coil (21) according to claim 6 manufactured from a high temperature superconductor and for cooling a thermal shield (25) of the coil (21), the refrigeration head (3) used for cooling the shield (25) being optimised for the temperature range of 50 to 80 K (Fig. 7).

8. Use of a single stage refrigerator (1) with the features of one of claims 1 to 4 for cooling pump surfaces (33) of a cryopump (31), the regenerator (6) disposed in the refrigeration head (3) being optimised for a temperature range of 10 to 35 K (Fig. 8).

9. Use of single stage refrigerators (1) with the features of one of claims 1 to 4 both for cooling the pump surfaces of a cryopump (33) according to claim 8 and for cooling a radiation shield (37) enclosing the pump surfaces (33), the refrigeration head (3) used for cooling the shield (37) being optimised for temperatures of approximately 80 K (Fig. 9).

## Revendications

1. Réfrigérateur basse température (1) utilisé pour produire des températures dans une gamme déterminée de basses températures, comportant une tête de refroidissement (3), qui est équipée d'un régénérateur (7), et dans laquelle un processus cyclique thermodynamique (processus régénératif de production de froid) est exécuté pour la production du froid; la tête de refroidissement (3) est agencée avec un seul étage et les caractéristiques physiques du régénérateur (7) de la machine frigorifique (1) sont choisies de manière que la tête de refroidissement (26) possède une puissance optimale de refroidissement dans la gamme de températures désirées; le régénérateur (6) possède à cet effet les trois couches suivantes : une première couche (14) qui est située sur le côté chaud du régénérateur et est formée de morceaux d'un treillis de bronze, qui s'étend sur une distance comprise entre les deux septièmes et les trois septièmes de la longueur du régénérateur (6); une seconde couche (4) formée de morceaux d'un treillis de bronze ayant une densité de mailles plus petite, qui s'étend également sur une distance comprise entre les deux septièmes et les trois septièmes de la longueur du régénérateur (6); une troisième couche (7), qui, en fonction de la gamme désirée de températures de consigne, est constituée par des billes de plomb, par un matériau formé d'une fritte de plomb ou par des morceaux du treillis de bronze, et s'étend sur une distance comprise entre un septième et deux septièmes de la longueur du régénérateur (6).

2. Réfrigérateur selon la revendication 1 ou 2, caractérisé en ce qu'il est optimisé pour des températures dans la gamme de basses températures de 15 à 35 K et possède les couches suivantes :
| première couche (14) : | |
|---|---|
| Matériau | bronze de Cu |
| Structure | treillis s'étendant radialement avec des mailles d'environ 200 mesh |
| Hauteur | environ 40 % de la longueur totale du régénérateur (6) |
| deuxième couche (15) : | |
|---|---|
| Matériau | bronze de Cu |
| Structure | treillis s'étendant radialement avec des mailles d'environ 120 mesh |
| Hauteur | environ 40 % de la longueur totale du régénérateur (6) |
| troisième couche (16) : | |
|---|---|
| Matériau | billes de plomb |
| Structure | φ 200 à 300 µm |
| Hauteur | environ 20 % de la longueur totale du régénérateur (6). |

3. Réfrigérateur selon la revendication 1, caractérisé en ce qu'il est optimisé pour des températures dans la gamme de températures de 35 à 80 K et qu'il possède les couches suivantes :
| première couche (14) : | |
|---|---|
| Matériau | bronze de Cu |
| Structure | treillis s'étendant radialement avec des mailles d'environ 200 mesh |
| Hauteur | environ 40 % de la longueur totale du régénérateur (6) |
| deuxième couche (15) : | |
|---|---|
| Matériau | bronze de Cu |
| Structure | treillis s'étendant radialement avec des mailles d'environ 120 mesh |
| Hauteur | environ 40 % de la longueur totale du régénérateur (6) |
| troisième couche (16) : | |
|---|---|
| Matériau | bronze au Cu |
| Structure | treillis s'étendant radialement avec des mailles de 80 à 200 mesh |
| Hauteur | environ 20 % de la longueur totale du régénérateur (6). |

4. Réfrigérateur selon la revendication 3, caractérisé en ce qu'à la place de morceaux de réseaux formés de bronze au Cu dans la première couche (14), il est prévu des morceaux d'un treillis en acier spécial avec des mailles de 100 à 200 mesh.

5. Utilisation d'un réfrigérateur (1) à un étage présentant les caractéristiques de l'une des revendications 1 à 4 pour le refroidissement d'un blindage (25) d'un aimant (21) formé d'un matériau supraconducteur aux basses températures, le régénérateur (6) situé dans la tête de refroidissement (3) étant optimisé pour la gamme de températures de 10 à 30 K (figure 5).

6. Utilisation d'un réfrigérateur (1) à un étage présentant les caractéristiques de l'une des revendications 1 à 4 pour le refroidissement d'une bobine (1) formée d'un supraconducteur à haute température, le régénérateur (6) situé dans la tête de refroidissement (3) étant optimisé pour la gamme de températures de 20 à 25 K (figure 6).

7. Utilisation d'un réfrigérateur (1) à un étage présentant les caractéristiques de l'une des revendications 1 à 4 aussi bien pour le refroidissement d'une bobine (21) réalisée en un supraconducteur à haute température, selon la revendication 6 que pour le refroidissement d'un écran de blindage thermique (25) de la bobine (21), la tête de refroidissement (3) utilisée pour le refroidissement de l'écran (25) étant optimisée pour la gamme de températures de 50 à 80 K (figure 16).

8. Utilisation d'un réfrigérateur (1) à un seul étage présentant les caractéristiques de l'une des revendications 1 à 4 pour le refroidissement des surfaces (33) d'une pompe cryogénique (31), le réfrigérateur (6) situé dans la tête de refroidissement (3) étant optimisé pour une gamme de températures de 10 à 35 K (figure 8).

9. Utilisation de réfrigérateurs (1) à un seul étage présentant les caractéristiques de l'une des revendications 1 à 4 aussi bien pour le refroidissement des surfaces d'une pompe cryogénique (33) selon la revendication 8 que pour le refroidissement d'un écran de protection contre le rayonnement (37), qui entoure les surfaces (33) de la pompe, la tête de refroidissement (3) utilisée pour le refroidissement de l'écran (37) étant optimisée pour des températures d'environ 80 K (figure 9).
